(19)

Europäisches
Patentamt
European
Patent Office
Office européen
des brevets

(11) **EP 3 843 027 A1**

(12) **EUROPEAN PATENT APPLICATION**

(43) Date of publication:
**30.06.2021 Bulletin 2021/26**

(51) Int Cl.:
***G06Q 50/06*** *(2012.01)*   ***G01D 4/00*** *(2006.01)*
***G06Q 10/06*** *(2012.01)*

(21) Application number: **19383204.5**

(22) Date of filing: **27.12.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicant: **Fundación Tecnalia Research &
Innovation
48160 Derio - Bizkaia (ES)**

(72) Inventors:
• **López Lobo, Jesús
  48160 DERIO (ES)**
• **Del Ser, Javier
  48160 DERIO (ES)**

(74) Representative: **Balder IP Law, S.L.
Paseo de la Castellana 93
5a planta
28046 Madrid (ES)**

(54) **METHOD, SYSTEM AND COMPUTER PROGRAM PRODUCT FOR PREDICTING WATER
USAGE IN A WATER SUPPLY NETWORK**

(57)   A computer-implemented method for making a prediction of water demand at a point (11-18) in a water supply network (10), the method comprising: providing at least one stream of data $D_{0,t} = d_0, ..., d_t$ representing the water consumption in a corresponding at least one point (11-18) in a water supply network (10), wherein $d_t = (\mathbf{x}_t, y_i)$ is a data instance captured at time t, $\mathbf{x}_t$ is a feature vector and $y_t$ its label, wherein label $y_t$ denotes whether there is an increase or decrease in the water demand/consume; creating a cellular automaton (121) defined by the following parameters: (i) lattice formed by a grid of elements or cells, (ii) states assigned to said cells, (iii) neighbourhood, and (iv) at least one local rule; wherein the lattice is formed by the at least one stream of data $D_{0,t}$ representing the water consumption in a respective at least one point in the water supply system (10), each of said streams of data representing a corresponding feature ($FEATURE_1$, $FEATURE_i$); wherein said states assigned to each cell indicate either an increase or a decrease in the water demand at said point (11-18) and therefore correspond to the labels; and predicting whether the water demand at said point (11-18) in the water supply network (10) will increase or decrease in a next sampling instant t+1 by comparing label $y_t$ of the new data instance $d_t$ with a prediction performed at the previous sampling instant.

FIG. 3

Description

TECHNICAL FIELD

The present invention relates to the field of smart water metering systems. More particularly, it relates to methods and systems for applying Real-time Machine Learning (RtML) techniques to water metering systems.

STATE OF THE ART

Conserving water is becoming increasingly important in the world, as the planet faces a widening gap between ever-reducing water supplies due to climate change, and an increased demand resulting from the global population growth. Water conservation means using less water and using alternate sources of water, but also using smarter systems to manage the water sources (i.e. predicting its demand). Smart irrigation application and control systems achieve far better efficiency levels of water utilization. Optimizing intensively water-consuming processes yields significant improvements. Automatic leak detection and monitoring systems permit to identify and then fix leaks, and even cut off the flow.

There are different ways of measuring water consumption. For example, US2017/0089798A1 discloses a method of water leakage detection, in which a smart electricity meter is associated with a water-consuming unit. Data obtained by the smart electricity meter during a predefined time period is used to determine usage of certain electric appliances in the water-consumption unit.

In turn, smart water systems are normal water meters linked to a device that allows continuous electronic reading and display of the water consumption. Once this information is available as an electronic signal, it can be captured, logged and processed like any other signal. A smart water meter shows the water consumption in real-time based on stream data. It can generate alarms for excessive use. It identifies abnormalities or anomalies as they occur so that a facility manager can take action to conserve precious and increasingly expensive water. It helps to understand water consumption at a site and derive corresponding water saving actions from it. In turn, it improves decision making and optimum allocation of capital. Frequently, these smart water systems are based on a network of sensors or tiny devices that capture the information in real-time (stream data), and send it to a centralized system. Then, decisions on water management are made based on data provided by these centralized systems.

For example, Alfarra H. A. et al. in A Wireless Smart Sensor Network for Flood Management Optimization (IJETS) Vol. 7 (1) June 2017, discloses a system for predicting water floods based on two parameters: water level and stream flow of water. WO2018/154449A1 discloses a system and method for monitoring water distribution and leakage detection, in which a smart water meter is connected to a pipe in a water distribution network. The smart water meter has a flow sensor which detects the water flow through the pipe. Data captured by the flow sensor is converted into electrical signals based on the amount of water flow. Water metrics are calculated from the electrical signals. Electrical signals from different pipes obtained by corresponding smart water meters are sent to a gateway from which they are provided to a server, in which the aggregated data is analyzed.

On the other hand, RtML or stream learning, acquired special relevance years ago with the advent of the Big Data era, as reported for example by Bifet, A. et al. in Machine Learning for Data Streams with Practical Examples in MOA-Book-2018, (2018) MIT Press, https://moa.cms.waikato.ac.nz/book/, becoming one of its major challenges. Data streams are the basis of the real-time analytics, composed by sequences of items, each having a timestamp and thus a temporal order, and usually arriving one by one. It is remarked that all historical data cannot be explicitly stored. And it is here where an algorithmic challenge emerges: data streams are fast and large (frequently infinite), and there is a need to extract information in real time from them. Consequently, approximate solutions implying limited resources (e.g. time and memory) must be used.

The prevalence of networks of sensors in smart water systems has led to an enormous and ever increasing amount of data that are now more commonly available in a streaming fashion. Often, it is assumed - either implicitly or explicitly - that the process generating such a stream of data is stationary, that is, the data are drawn from a fixed, albeit unknown probability distribution. In many cases, however, such an assumption is simply not true, and the underlying process generating the data stream is characterized by an intrinsic non-stationary (or evolving or *drifting*) phenomenon. The non-stationarity can be due, for example, to seasonality or periodicity effects, changes in the users' water consumption habits, water leaks, thermal drifts or aging effects in sensors deployed in irrigation pipelines, etc. In such non-stationary environments, where the probabilistic properties of the data change over time, a non-adaptive model trained under the false stationarity assumption is bound to become obsolete in time, and perform sub-optimally at best, or fail catastrophically at worst. Therefore, these predictive models need to detect the drift and be adapted to these changes as fast as possible, while maintaining good performance scores (i.e. accuracy), as reported for example by Gama, J. et al. in A survey on concept drift adaptation, ACM computing surveys (CSUR), 46, 44 (2014).

For all these reasons, there is an increasing interest in developing stream learning methods (SLMs) applicable to smart water systems -among many other real applications-, which obtain the maximum performance score, using minimum time and low memory at the same time. The Internet of Things paradigm (IoT) deserves special attention, where a huge quantity of data is continuously generated in real time by sensors and actuators connected by networks to computing systems. IoT can benefit the water management by monitoring the smart irrigation, the waste-water management, the water conservation, achieving fewer maintenance costs, and carrying out water quality testing and analysis. IoT uses these SLMs to deal with this real-time information. Many of these SLMs are based on traditional learning methods (i.e. Naive Bayes, Support Vector Machines, Decision Trees, Gaussian methods, or Neural Networks, as reported for example by Bifet A. et al. in the already cited MOA-Book-2018). Some of these SLMs have been *streamified* to make them incremental and fast, while others are already like that.

Therefore, there is a latent necessity of stream learning approaches that handle concept drift in smart water systems.

DESCRIPTION OF THE INVENTION

The present invention provides a computer-implemented method and system for making a water flow prediction in a water supply network, which intend to solve the shortcomings of prior-art methods and systems therefor. Water flow is managed at different stages in a water supply network taking into account the occurrence of a drift, -and adapting to it- in stream learning using a cellular automaton (CA).

The method of the present invention uses a stream of data representing the water consumption/usage at at least one point in the water supply network. While in conventional approaches it is often erroneously assumed that the process generating the stream of data is stationary, in the present invention it is assumed that the underlying process generating the data stream is characterized by an intrinsic non-stationary (or evolving or drifting) phenomenon. In the context of the present invention, drift means changes in the distribution of streaming data. The drift may be provoked by sensors aging or heating, seasonality or periodicity effects, changes in the users' water consumption habits, water leaks, among others. The method of the present invention is based on a predictive model that adapts to changes (drifts) as fast as possible, while maintaining good performance scores (i.e. accuracy). In other words, because of the evolving conditions of the data associated to smart water management, it is used an adaptive CA-based predictive model that is trained under the non-stationary assumption.

The method predicts whether the water consumption/usage at a certain point of the water supply network will increase or decrease (binary prediction) in the next sampling time or time instant t+1. To this end, the relationship between the consumption/usage at sampling times t-W, t-W+1, ..., t at the same point of the water supply network is modelled and correlated with the future increase or decrease of water consumption at the same point. This is constrained to the following conditions:

(1) The effective time lapse between consecutive sampling times t and t+1 is small enough not to be able to retrain the model from scratch. This effective time lapse will depend on the technology (i.e. GSM-based, etc.) and on the architecture used for collecting and processing data. In other words, the method operates in real time. This means that the method is capable of predicting and training the model between two consecutive instances or samples. In the context of the present invention, the term "real time" refers to a time period (between two consecutive samples) comprised within a range varying between 0.2 seconds and 120 seconds, or between 0.5 and 90 seconds, or between 1 and 60 seconds, taking into account that in order to save power in conventional sensor networks, data may be sent to base station with a frequency of 1-60s approximately. These values are within the range considered in conventional smart water monitoring systems, such as the one reported by Alfarra H.A. et al. Nevertheless, one skilled in the art will understand that the evolution of technology may enable to reduce the lower limit of 0.2 seconds to a still lower limit, such as 0.1 seconds, or 0.05 seconds, or 0.01 seconds. In embodiments of the invention, the value taken by the lapse time may depend on the location of the sensor within the water supply system, on the available communications technology and/or on external conditions, such as general monitoring or alarm situation.

(2) Furthermore, given this fast sampling rate, the amount of historically collected data (e.g. 31.5 millions of readings in one year when the reading frequency is set to 1s) cannot be stored and learned offline every time a new reading (instance) arrives.

(3) Finally, the variability of the water consumption habits along the pipelines/different stages in the water supply network makes the collected data prone to changes in the correlation between inputs and outputs of the prediction model, which ultimately requires a prediction model to be designed so as to accommodate these non-stationarities.

The proposed method is based on a CA used in stream learning and which performs adaptation to drift. The prediction model is implemented with the CA, also referred to as streaming CA (sCA), which additionally learns incrementally and adaptively to the non-stationary changes of the water flow. From the obtained prediction, an action may be performed, if necessary, on one or more points in the water supply system. As a matter of example, such actions may be repearing a water pipe, or in general, improving the water supply at a certain point in the system.

A first aspect of the invention relates to a computer-implemented method for making a prediction of water demand at a point in a water supply network, the method comprising: providing at least one stream of data $D_{0,t} = d_0, ..., d_t$ representing the water consumption in a corresponding at least one point in a water supply network, wherein $d_t = (\mathbf{x}_t, y_i)$ is a data instance captured at time t, $\mathbf{x}_t$ is a feature vector and $y_t$ its label, wherein label $y_t$ denotes whether there is an increase or decrease in the water demand/consume; creating a cellular automaton defined by the following parameters: (i) lattice formed by a grid of elements or cells, (ii) states assigned to said cells, (iii) neighbourhood, and (iv) at least one local rule; wherein the lattice is formed by the at least one stream of data $D_{0,t}$ representing the water consumption in a respective at least one point in the water supply system; wherein said states assigned to each cell indicate either an increase or a decrease in the water demand at said point as denoted by the labels; at said cellular automaton, predicting whether the water demand at said point in the water supply network will increase or decrease in a next sampling instant t+1 by comparing label $y_t$ of the new data instance $d_t$ with a prediction performed at the previous sampling instant.

In embodiments of the invention, the step of predicting whether the water demand at said point in the water supply network will increase or decrease in a next sampling instant t+1, is performed every time a new data instance $d_t$ arrives, updating the cells forming said grid in the cellular automaton (121) by assigning an incoming state represented by label $y_t$.

In embodiments of the invention, for updating the grid, only the previous state of the cell and the current state provided by the recent data instance are checked, and if they are the same state, no change is required, but if they differ, the cell adopts the state provided by the incoming data instance.

In embodiments of the invention, the prediction for the next sampling instant t+1 is updated with respect to the previous prediction only when a drift has been detected.

In embodiments of the invention, the step of predicting whether the water demand at said point in the water supply network will increase or decrease in a next sampling instant t+1, is performed as follows: for every prediction performed at the previous sampling instant, delivering the cellular automaton a performance accuracy to a drift detector; based on said performance accuracy, the drift detector obtaining a flag indicating whether drift has been detected or not; and when the flag indicates that a drift has been detected, acting on the cellular automaton to adapt to the detected drift.

In embodiments of the invention, after a drift has been detected, the cellular automaton is initialized. It may be initialized as follows: the cellular automaton is seeded with a sliding window w of past instances which represent the current concept or data distribution, wherein the size of window w depends on the type of drift; the cellular automaton progresses again through several iterations, applying the local rule, until all cells are assigned a state.

In embodiments of the invention, in order to also consider possible spatial correlations along the water supply system, said time window w is extended with water consumption measurements collected in a plurality of points along the water supply system.

In embodiments of the invention, the method further comprises, in view of the prediction, performing an action, if necessary, on one or more points in the water supply system.

A second aspect of the invention relates to a device comprising: means for providing at least one stream of data $D_{0,t} = d_0, ..., d_t$ representing the water consumption in a corresponding at least one point in a water supply network, wherein $d_t = (\mathbf{x}_t, y_i)$ is a data instance captured at time t, $\mathbf{x}_t$ is a feature vector and $y_t$ its label, wherein label $y_t$ denotes whether there is an increase or decrease in the water demand/consume; a streaming processor embedding a cellular automaton defined by the following parameters: (i) lattice formed by a grid of elements or cells, (ii) states assigned to said cells, (iii) neighbourhood, and (iv) at least one local rule; wherein the lattice is formed by the at least one stream of data $D_{0,t}$ representing the water consumption in a respective at least one point in the water supply system; wherein said states assigned to each cell indicate either an increase or a decrease in the water demand at said point as denoted by the labels; wherein the cellular automaton is configured for predicting whether the water demand at said point in the water supply network will increase or decrease in a next sampling instant t+1 by comparing label $y_t$ of the new data instance $d_t$ with a prediction performed at the previous sampling instant. In embodiments of the invention, the device further comprises a data communications module configured to send data instances captured by a meter associated to the device and to receive data instances from other devices.

A third aspect of the invention relates to a computer program product comprising computer program instructions/code for performing the method according to the first aspect of the invention.

A fourth aspect of the invention relates to a computer-readable memory/medium that stores program instructions/code for performing the method according to the first aspect of the invention.

Additional advantages and features of the invention will become apparent from the detail description that follows and will be particularly pointed out in the appended claims.

**BRIEF DESCRIPTION OF THE DRAWINGS**

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out.

The drawings comprise the following figures:

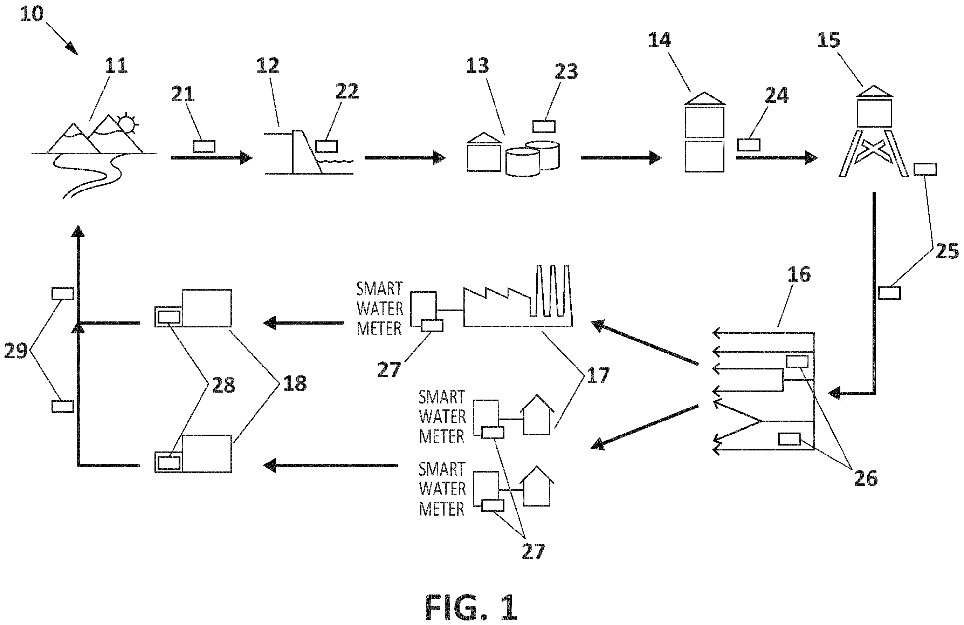

Figure 1 schematically shows different stages in a water supply system. Different points in the system in which the method for water flow prediction of the invention may be applicable, are identified. Sensors are disposed in these points in the system in order to collect data (referred to as samples, instances or sensor readings) in the form of a data stream, to be treated for making predictions and/or training the model.

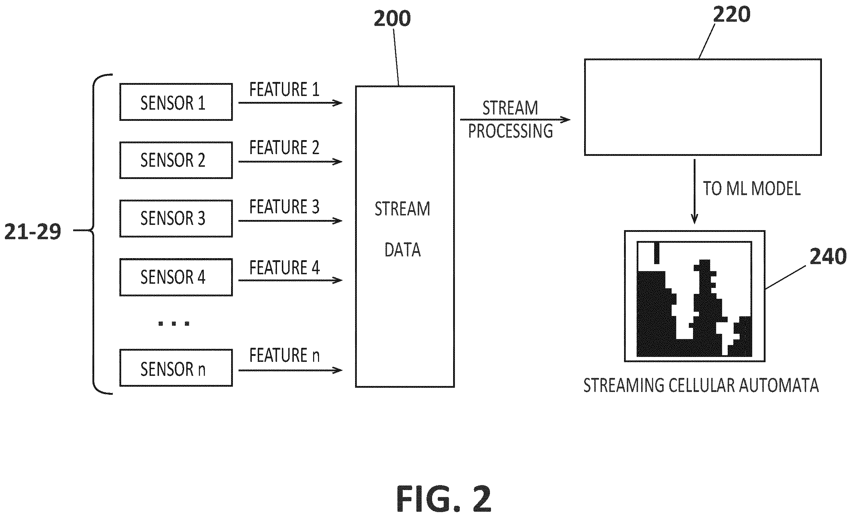

Figure 2 schematically shows an architecture representing data streams captured at a plurality of sensors in a water supply system, and how the data streams are processed in order to make a prediction, according to embodiments of the invention.

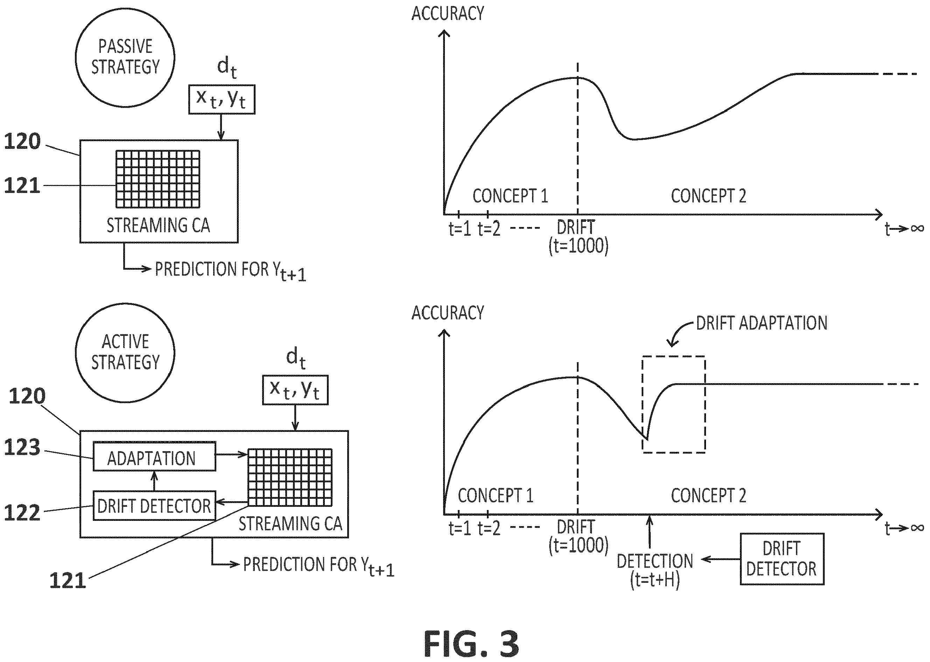

Figure 3 graphically represents two stream learning strategies for the CA-based predictive model of the present invention. At the top, it shows a *passive* strategy where the drift detection is not required and the model learns incrementally a new concept whereas the old one is forgotten. At the bottom, it shows an *active* strategy where an adaptation mechanism is triggered when the drift is detected by a detector module. Both provide a water consumption/usage prediction from data streams captured by one or more sensors in the water supply system.

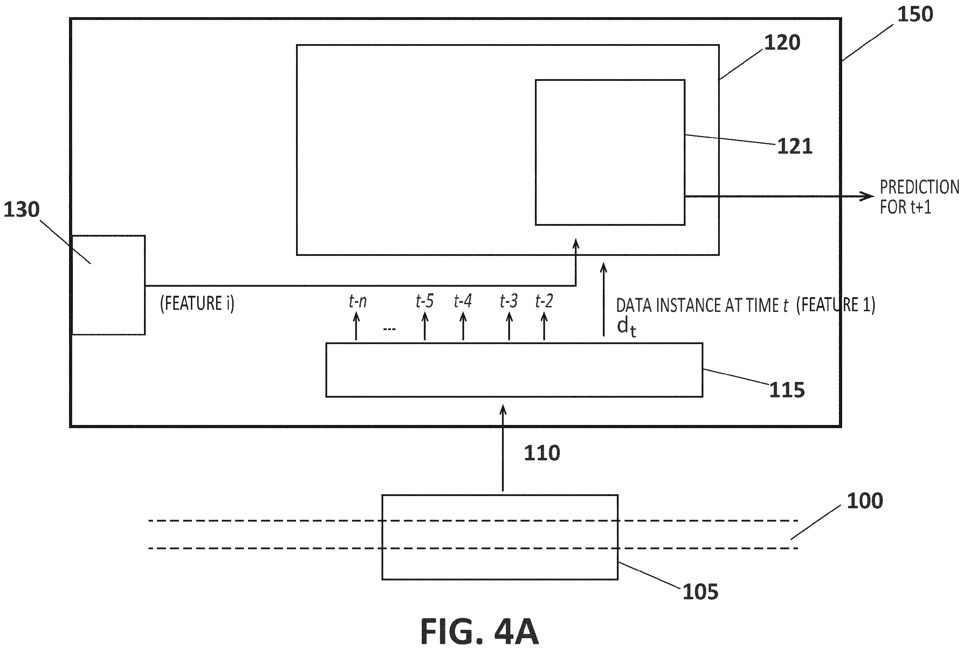

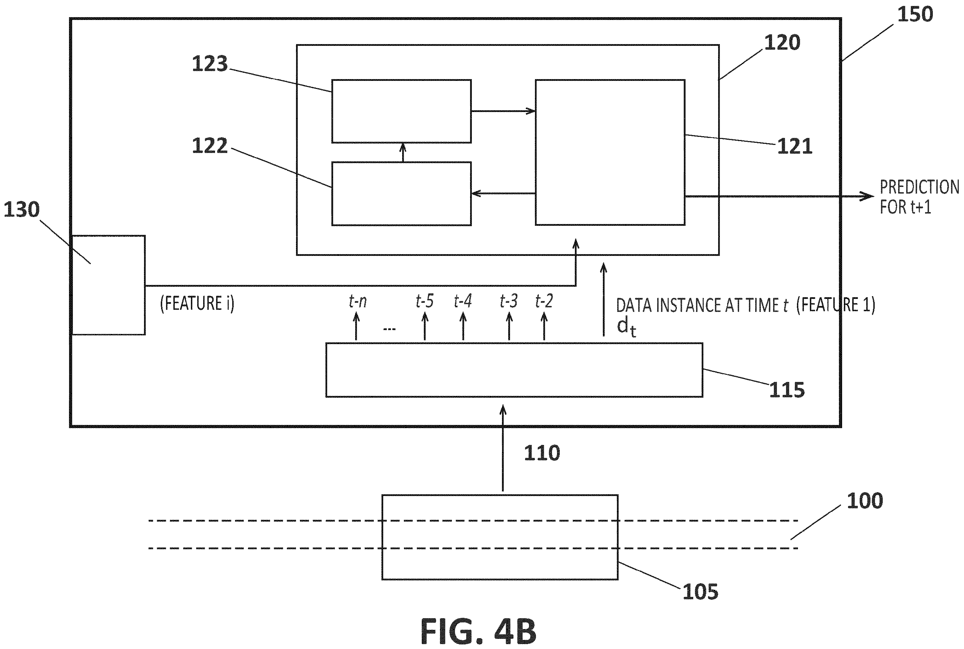

Figures 4A and 4B show block diagrams regarding the *passive* and *active* strategies respectively for implementing the method according to embodiments of the present invention.

**DESCRIPTION OF A WAY OF CARRYING OUT THE INVENTION**

Figure 1 schematically shows an exemplary, conventional water supply system 10. In the top left corner, a water source and extraction system 11 is represented. When water is extracted from a source, such as a river or lake, it is typically taken to a water reservoir 12, from which it is in turn taken to a water storage and purification system 13. Once cleaned/purified, water is then conducted to a water booster pump system 14, from which water is directed to a water tower 15. From the water tower 15, it is taken to a water distribution network 16, represented in Figure 1 as a set of distribution pipes of different hierarchy. Through these pipes, water is distributed to different facilities of water use 17, such as factories, business areas, public services (hospitals, schools, etc.), private services (shopping centers, restaurants, hotels, etc.) and homes (domestic use). From all these facilities 17, wastewater may be taken to wastewater treatment plants 18, in which a combination of various processes -such as physical, chemical and/or biological- are used to treat industrial wastewater and remove pollutants. Treated water may be forwarded to natural water sources 11 again. In Figure 1, this is represented with an arrow towards the water source and extraction system 11.

In order to perform the method for water flow prediction (e.g. water consumption/usage at a concrete point) of the present invention, a network of sensors (such as water stream flow sensors that are capable of measuring the volume of water per time unit) is disposed at different stages in the water supply system 10. Exemplary sensors are represented in Figure 1: Sensors 21 for capturing in real-time data for analysis on water extraction, for obtaining water availability patterns and/or for accurate forecasting in supply planning. Sensors 22 for improving water reservoir efficiency and effectiveness. These sensors 22 may be disposed at the water reservoir 12. Sensors 23 for real-time monitoring of water quality. These sensors 23 may be disposed at the water storage and purification system 13. Sensors 24 for monitoring and optimizing energy requirements in pump systems. These sensors 24 may be disposed at the water booster pump system 14. Sensors 25 for providing data (such as volume, quality, pressure, etc.) to a real-time hydraulic modeling water distribution tool. These sensors 25 may be disposed at the water tower 15 and/or between the water tower 15 and the water distribution network 16. Sensors 26 for leaks detection, ghost pipes detection and/or outage detection. These sensors 26 may be disposed at the water distribution network 16. Sensors 27 in smart meters for reducing non-revenue water, for real-time monitoring of water usage, with application in typical actions associated with smart meters (learn about consumer behavior to enable smart water pricing, for example). These sensors 27 may be integrated in or attached to smart meters, typically at end-user facilities 17. Sensors 28 for identifying leakages and reduce health risks. These sensors 28 may be disposed at wastewater treatment plants 18. Sensors 29 for monitoring in real-time the amount of water released/given back to nature. These sensors 29 may be disposed at pipes conducting water from the wastewater treatment plants 18 to the natural water sources 11.

Thus, each sensor 21-29 captures, at the point of the water supply system 10 in which it is located, a data stream composed by sequences of items (instances that corresponds to sensor readings), each having a timestamp and thus a temporal order, and usually arriving one by one. Captured data streams imply huge volumes of data. The amount of data in a data stream can be so high, and the time lapse T between consecutive instances is so short (in other words, data streams are fast and large, usually infinite), that in practice all historical data cannot be explicitly stored. Information must be extracted and processed from the data streams in real time, that is to say, within said time lapse T. Figure 2 schematically shows an architecture representing data streams captured at a plurality of sensors (SENSOR_1, SENSOR_2, ..., SENSOR_n). The shown sensors represent any of the sensors 21-29 illustrated in Figure 1. In Figure 2, each data stream captured by respective sensors is referred to as FEATURE_n. Thus, SENSOR_1 captures a data stream referred to as FEATURE_1, SENSOR_2 captures a data stream referred to as FEATURE_2, and so on. In other words, a feature refers to a data stream captured at a point on the water supply system 10 by a corresponding sensor of the network of sensors 21-29. Block 200 represents a data instance $d_t$, $=(X_t,Y_t)$ in which different features coming from respective different sensors are aggregated. All these features are integrated constituting the data instance $(X_t,Y_t)$ that serves as input for the streaming architecture 220 in Figure 2 (120 in Figure 3). The stream of data provided at the output of block 200 is delivered to stream processing means 220, wherein data is processed to feed the predictive model (such as a machine learning model) of the present invention, which is based on a CA 240, in particular a streaming CA (sCA). Thus, in order to make a water flow prediction at a certain point 11-18 in the water supply system 10, the method may take into account not only the data stream (feature) captured at said specific point in the system 10, but also data streams (features) indicating the water flow captured at different points (typically upstream) in the system 10.

Besides, the process generating this stream of data may be characterized by an intrinsic non-stationary phenomenon -a drifting phenomenon. In other words, sensors 21-29 may suffer from concept drift, in which case they need drift adaptation and/or detection mechanisms depending on the selected strategy. In the context of the present invention, drift means changes in the distribution of streaming data. This means that learning methods have to adapt to the evolving conditions and optionally detecting the changes. The mentioned non-stationarity can be due, for example, to seasonality or periodicity effects, changes in the users' water consumption habits, water leaks, thermal drifts, heating effects, low battery or aging effects in sensors 21-29 deployed at different points in the water supply system 10, etc. Processing such fast streams demands high memory and processing resources/means 220. Non-limiting technologies for processing the captured data streams may be, as a matter of example, the well-known Spark Streaming, which enables scalable, high-throughput, fault-tolerant stream processing of live data streams. Such architecture, or any other enabling such stream processing, may be implementing in any conventional suitable processing means (processor or group of processors).

Learning and adaptation to drift in non-stationary environments requires modelling approaches capable of monitoring, tracking and adapting to eventual changes in the produced data. In this context, a drift may occur in the feature domain (new features appear, part of them disappear, or their value range evolves) or in the class domain (new classes/labels/target variables emerge or some of them fade along time). More formally, concept drift between time step $t_1$ and t can be defined as:

$$\exists x \in X: p_{t_{-1}}(x,y) \neq p_t(x,y),$$

where $p_{t-1}(x,y)$ and $p_t(x,y)$ are the joint probability distributions at time steps $t_{-1}$ and $t$, respectively, between the input variables/features $x$ (that is, the readings of the sensors at a concrete time step) that conform a data instance and the classes/labels/target variable $y$. Specific terminology is often used to indicate the cause or nature of changes. In terms of what is changing drifts can be: (a) "real drift", when the posterior probabilities of classes $p(y|x)$ vary over time independently from variations in $p(x)$, having an impact on unconditional probability density functions, and (b) "virtual drift", when the distribution of the input data $p(x)$ changes without affecting the posterior probabilities of classes $p(y|x)$, but affects only the conditional probability density functions. From now on the term concept drift or drift will refer to real drift.

The method for predicting the water demand at a point in a water supply network of the present invention uses an adaptive predictive model that adapts to changes (drift) as fast as possible. Such model is based on cellular automata algorithms in real-time. Cellular automata are chosen due to their capability to be computationally complete and to their parallel nature, which allows special-purposed hardware to be implemented. Besides, cellular automata as stream learning algorithm can be embarked in miniaturized devices running on low-power hardware with limited storage, for example in streaming sensors or network of sensors as the ones shown in Figure 1. The method of the invention may be implemented according to different embodiments. In particular, adaptation to concept drift may be carried out following either a passive strategy or an active one, as explained with reference to Figure 3. In a possible embodiment, in which a passive approach is used, the predictive model, embodied in a CA, predicting the water consumption/usage at a point in the water supply system 10, is continuously updated every time new data instances are received, ensuring a sufficient level of diversity in its captured knowledge to accommodate changes in their distribution. In an alternative embodiment, in which an active approach is used, the predictive model embodied in a CA, predicting the water consumption/usage at a point in the water supply system 10, gets updated only when a drift is detected, for which a drift detector is used. Both strategies can be successful in practice, however, the reason for choosing one strategy over the other will be specific to the application. In general, a passive strategy will be quite effective in prediction settings with gradual drifts and recurring concepts, while an active strategy works quite well in settings where the drift is abrupt. Besides, a passive strategy is generally better suited for batch learning, whereas an active strategy works well in online settings. Thus, any of them may be adopted depending on the type of drift.

Figure 3 shows two graphs representing the performance accuracy (*y* axis) of the prediction performed by the model of the invention along t (*x* axis) using both approaches. The model is schematically represented on the left of each graph. In the model implementing the passive approach, a module 120 receives a data instance $d_t$, where $d_t = (\mathbf{x}_t, \mathbf{y}_t)$, wherein $\mathbf{x}_t$ is the feature vector and $\mathbf{y}_t$ its label. Data instance $d_t$ typically represents water flow at different points in Figure 1, that is to say, volume of water per time unit (e.g. m³/hour). Module 120 is a stream processor. A CA 121 comprised / implemented/ embedded in module 120 makes a prediction for $y_{t+1}$. In the model implementing the active approach, stream processor 120 receives a data instance $d_t$. Module 120 implements /embeds a cellular automaton 121, a drift detector 122 and an adaptation module 123, all of them being involved in the production of a prediction for $y_{t+1}$. In both cases, at an unknown certain time instant, a concept drift may occur, that is to say, concept (data distribution) changes from concept 1 (data distribution before drift appears) to concept 2 (the new data distribution after drift appears). As already explained, concept drift may occur due to different causes, such as seasonality or periodicity effects (day/night; winter/summer), changes in the users' water consumption habits, water leaks, thermal drifts, heating effects, low battery in a sensor, etc. In the passive approach, assuming that the drift occurs for example at t=1000, an explicit detection is not required, but the model slightly accommodates to this change by learning incrementally the new concept (concept 2) while forgetting the old one (concept 1). In the active approach, assuming in a similar way that that the drift occurs for example at t=1000, a proper detection is required at t=t+H (a detection delay must be assumed). Immediately after the drift detection, drift adaptation starts, thus achieving quick adaptation to the new concept (concept 2) while forgetting the old one (concept 1).

Figure 4A shows a block diagram of the method for predicting the water consumption/usage at a point in the water supply system 10 following the passive approach. A similar block diagram of the method following the active approach is shown in Figure 4B. In both cases, a meter 105, such as a smart meter, takes measurements of water flow, for example travelling along a water pipe 100. Meter 105 is assembled or connected to a sensor 150. In other words, a meter 105 is associated to a corresponding sensor 150. Sensor 150 may be any one of sensors 21-29 in Figure 1. Thus, block 105 generally represents a process for generating Smart water data 110 for a sensor. This process may be generated in any of the sensors 21-29 disposed at different points of the water supply system 10. As a result, a stream of data 110 is obtained. The data stream 110 can be represented as $d_1, d_2, ..., d_t$, as shown in Figure 2, wherein each piece of data (data instance) $d_1, ..., d_t$ is captured at respective time instant $t_1, ..., t_n$. There is a time lapse T between consecutive instances, such that $t_{i+1} = t_i + T$. At block 115, data streams are read once per arriving sample (instance, reading). Block 115 is a stream reader, implemented for example with a circular buffer (FIFO). In Figures 4A-4B, the size of the circular buffer is n. The stream reader 115 delivers a data instance (sample, sensors readings) at each time instant t. In Figures 4A-4B, n time and infinite instants are represented. Current data instance at time t is represented as being provided to block 120. Sensor 150 also has a data communications module 130, configured to send/receive data, in particular it sends data instances captured at sensor 150 to other sensors in the network of sensors, and receives data instances captured at other sensors. Data communications module 130 typically implements a wireless communications protocol. It is out or the scope of the present invention. Data instances received from other sensors in the network of sensors represent different features as schematized in Figure 2. It is remarked that although in the scheme of Figures 4A-4B, data instances (features) obtained at different sensors are shown to be input to block 120, in practice a block similar to block 200 in Figure 2 is preferably used, in which features different features coming from respective different sensors are aggregated. In such case, all these features are integrated constituting the data instance $(X_t, Y_t)$ that serves as input for the streaming architecture 120 in Figures 4A-4B. How the data instances at different time instants (and from different sensors, thus representing the water flow at different points in the water supply network 10) are treated by the adaptive predictive model of the present invention is represented in block 120.

Block 120 has already been introduced in Figure 3. Block 120 is a processor, in particular a stream processor. In other words, it implements the sensor intelligence. In Figure 4A, corresponding to the passive approach, the stream processor 120 implements /embeds, a module for stream learning and adaptation 121. Module 121 is based on a CA, which is adapted for stream learning. The CA is described in detail a bit later in this description. Module 121 delivers a prediction for t+1.

In Figure 4B, corresponding to the active approach, the stream processor 120 implements /embeds, a module for stream learning 120 based on a CA, a module 122 for detecting changes when a new instance arrives during the streaming process (or in general, when a new instance coming from the current sensor 150 and from each remote sensor arrives); and a module 123 for drift adaptation. In particular, the cellular automaton 121 delivers values of performance accuracy in the prediction (see Figure 3) to a drift detector 122. Drift detector 122 is out of the scope of the present invention. Any suitable drift detector 122 may be used. Drift detector 122 provides, based on the performance accuracy value received from the cellular automaton 121, a flag (YES/NO bit or ON/OFF bit) indicating whether drift has been detected or not. When the flag is ON, module 123 acts on the CA 121 to adapt to the detected change.

In Figures 4A-4B, module 121 is a streaming CA-based learner. In other words, it is a CA for RtML which incrementally learns under evolving conditions (drifts or changes). In this context, learning or training means that it compares the label $y$ of a new data instance $d_t$ with the current state of the corresponding cell, to check whether they are the same or different. In case they are the same, the state of the cell will remain unchanged, but when they differ, the state of the cell will be the label of the incoming data instance $d_t$ ($y$). This mechanism is clearly shown in Algorithm 1. A streamified cellular automaton or streaming cellular automaton (sCA) is thus implemented, which learns incrementally from data streams or datasets. In the embodiment depicted in Figure 4B, the stream processor 120 incorporates, in addition to module 121, an embedded mechanism for drift adaptation 123. A CA is chosen due to its capacity to model complex systems from simple structures.

The stream learning process evolving over time can be formally defined as follows: given a time period [0, t], the historical set of instances collected at a sensor 150 is denoted as $D_{0,t} = d_0, ..., d_t$, where $d_t = (\mathbf{x}_t, y_t)$ is a data instance, $\mathbf{x}_t$ is the feature vector and $y_t$ its label. Label $y_t$ is also referred to as class or target variable. In the context of prediction of water demand/usage, label $y_t$ denotes whether there is an increase or a decrease in the water demand/consume. It is assumed that $D_{0,t}$ follows a certain joint probability distribution $P_t (\mathbf{x}, y)$. As explained, these data streams are usually affected by non-stationary events (drifts) that eventually change their distribution (concept drift), making predictive models trained over these data obsolete. Concept drift at timestamp t+1 occurs if $P_t (\mathbf{x}, y) \neq P_{t+1} (\mathbf{x}, y)$, i.e. as a change of the joint probability distribution of $\mathbf{x}$ and y at time t. In the present invention, because it is not possible to explicitly store all past data to detect or quantify a change (drift) and the stream learning acts in an online manner, concept drift may be tackled either using an active strategy, in which the model gets updated only when a drift is detected, or using a passive strategy.

A stream learning process is defined as one that generates on a given stream of training data $d_1, d_2, d_3, ..., d_t$ a sequence of models $M_1, M_2, M_3, ..., M_t$. In the present case labelled training data $d_i = (x_i, y_i) \in R^n \times \{1, ..., C\}$ and $h_i :$ $R^n \{1, ..., C\}$ is a model function solely depending on $h_{i-1}$ and the recent $p$ instances $d_i , ..., d_{i-p}$ with $p$ being strictly limited (in the present invention $p = 1$, representing a real case with a very stringent use case of online learning). The learning process in streaming is incremental, which means that the following challenges have to be faced:

- The stream algorithm adapts/learns gradually (i.e. $h_{i+1}$ is constructed based on $h_i$ without a complete retraining),

- Retains the previously acquired knowledge avoiding the effect of catastrophic forgetting, and

- Only a limited number of $p$ training instances are allowed to be maintained. In this invention a real stream learning approach has been applied under stringent conditions in which instance storing is not allowed.

The CA-based model of the present invention predicts the water demand/usage from a dataset which is formed by couples $(x_t, y_t)$ (i.e. an instance), and builds a mapping function $\hat{y}_t = (x_t, y_t)$ by using these couples. Its goal is to select the best function that minimizes the error between the actual output $(y_t)$ of a system and predicted output $(\hat{y}_t)$ based on instances of the dataset (training instances). Therefore, $y_t, \hat{y}_t \in \{0,1\}$ or also $y_t, \hat{y}_t \in \{increase, decrease\}$. In the testing phase where a prediction is required, the CA searches the cell that corresponds to the incoming data instance $d_t$, and it assigns the state of the cell to $\hat{y}_t$.

Thus, the CA-based model predicts whether the water consumption at a point in the water supply network will increase or decrease in the next sampling instant t+1. The prediction model M is implemented as the already mentioned sCA 121.

A CA is well-known to have four mutually interdependent parts: (i) the lattice, (ii) its states, (iii) the neighbourhood, and (iv) local rules. A lattice is created by a grid of elements (cells), which can be composed in one, two or higher dimensional space, but typically composed of uniform squared cells in two dimensions. In the context of the present invention, the lattice is formed by at least one feature (FEATURE_1, FEATURE_2... in Figure 2) representing the data instances collected at respective sensors (or points) in the water supply system. In other words, if the method of the invention is used to predict water demand/usage at a certain point in the water supply system (typically at a home or at an industrial/service installation 17), using data collected at the local sensor 27 disposed at said point, plus one or more sensors providing corresponding data streams, located at different points in the system 10, each group of data streams, representing the water flow at said point, is a feature. In a minimum configuration, only the local sensor disposed at the point of the water supply system 10 in which the water demand is to be predicted may be used, in which case lattice is one single feature. Thus, the lattice represents the dimensions of the cellular automaton. CA contains a finite set of discrete states, whose number and range are dictated by the phenomenon under study. The simplest CA can be built using only one Boolean state in one dimension. In the context of the present invention, there are two possible states:

up/down (in other words, 0/1 or increase/decrease of water demand/usage). The neighbourhood, which is used to evaluate a local rule, is defined by a set of neighbouring (adjacent) cells. A neighboring cell is any cell within a certain radius of the cell in question. Additionally, it is important to specify whether the radius R applies only along the axes of the cell space (von Neumann neighborhood) or if it can be applied diagonally (Moore neighborhood). In two dimensions, the R=1 von Neumann neighborhood or the R=1 Moore neighborhood are often selected.

Finally, a local rule defines the evolution of each CA; it is usually realized by taking all states from all cells within the neighbourhood and by evaluation of a set of logical and/or arithmetical operations written in the form of an algorithm. In other words, local rules define how to update a cell with respect to its neighbors. A CA can be formally defined as follows, by adopting the notation used by in Kari, J., in Theory of cellular automata: A survey; Theoretical Computer Science 334 (2005) 3-33:

$$A \doteq (d, S, f_{\boxplus}, f_{\mho}),$$

where d represents the dimension, S a finite set of discrete states, $f_{\boxplus}(\cdot)$ is a function that given a cell's coordinates at its input, returns the neighbors of the cell to be used in the update rule, and $f_{\mho}(\cdot)$ is a function that updates the state of the cell at hand as per the states of its neighboring cells. Therefore, in the case of a radius R=1 von Neumann neighborhood defined over a d=2-dimensional lattice, the set of neighboring cells and state of cell with coordinates c=[I,j] is given by:

$$f_{\boxplus}([i,j]) = \{[i, j+1], [i-1, j], [i, j-1], [i+1, j]\} \tag{1}$$

$$S(c) = S([i,j]) = f_{\mho}(S([i, j+1]), S([i-1, j]), S([i, j-1]), S([i+1, j])) \tag{2}$$

i.e., the status vector S([i,j]) of the [i,j] cell within the lattice is updated according to the local rule $f_{\mho}(\cdot)$ applied over its neighbors given by $f_{\boxplus}([i,j])$. In general, in a d-dimensional space, a cell's von Neumann neighborhood will contain 2d cells, and a Moore neighborhood will contain 3d-1 cells. With this in mind, a cellular automaton should exhibit three properties to be treated as such: i) parallelism or synchronicity (all of the updates to the cells compounding the lattice are done at once); ii) locality (when a cell [i,j] is updated, its state S[i,j] is based on the previous state of the cell and those of its nearest neighbors), and iii) homogeneity or properties-uniformity, (the same update rule $f_{\mho}(\cdot)$ is applied to each cell).

In the sCA implemented by the method of the present invention, the following must be taken into account:

- Grid of cells (lattice): For n features, an approach adopted is to assign one grid dimension to each feature of the dataset. Once dimensions of the grid have been set, each grid dimension needs to be partitioned by the feature's values, obtaining an equal number of cells per dimension. To do that, evenly spaced values based on the maximum and minimum feature values (with an additional margin (marg) to ensure a minimal separation among feature's values) are used to create "bins" for each dimension of the data, which ultimately yield the cells of the lattice. While in a minimum configuration, only one sensor, disposed at the point of the water supply system 10 in which the water demand is to be predicted, may be used, which implies that lattice is one single feature, in preferred embodiments, at least two sensors are used, in which case lattice is formed by a 2D grid.
- States: a finite number of discrete states |S| are defined, corresponding to the number of classes considered in the task. In the present case, two possible states (UP/DOWN) are used.
- Local rule: the update rule f(.) can be set to very assorted forms, for example, a majority voting among the states (labels) of its neighbors, i.e. for d=2, meaning 2 features and therefore 2 dimensions,

$$S([i,j]) = \frac{\arg max}{s \in S} \sum_{[k,l] \in f_{\boxplus}([i,j])} \mathbb{I}(S([k,l]) = s), \qquad (3)$$

where $f_{\boxplus}([i,j])$ returns the coordinates of neighboring cells of [i,j], and $\mathbb{I}(.)$ is an auxiliary function taking value 1 if its argument is true (and 0 otherwise). Any other update rule can be defined to spread the state activation of each cell over its neighborhood.

- Neighborhood: it is necessary to specify a neighborhood and its radius. Although there are more types of local rules, "von Neumann" or "Moore" neighborhoods are preferably used.
- Initialization: the grid is seeded depending on the feature values of the instances of a training set. In other words, a training set of a certain time duration is used (for example, several seconds, minutes or days, depending for example on the point of the water supply system at which water demand is to be predicted). Specifically, if the local rule is the "majority voting" already mentioned, the state to each cell is assigned the label corresponding to the majority of training data instance with feature values falling within the range covered by the cell. As a result, cells will organize themselves into regions of similar labels.
- Generations: after the initialization step, some cells may remain unassigned. Then, it is necessary to run the sCA (generations or iterations applying the local rule) until no cells are left empty, and then continuing until either no changes are made or a fixed threshold is exceeded. Along this process each cell computes its new state by applying the update rule over the cells in its immediate neighborhood. Each cell follows the same update rule, and all cells are updated simultaneously and synchronously. A critical characteristic of CAs is that the update rule examines only its neighboring cells, so its processing is entirely local. No global or macro grid characteristics are computed whatsoever.

In the present invention, the design of the sCA 121 is adapted to cope with the constraints imposed by stream learning. In other words, a streamified cellular automaton (sCA) is proposed in module 121 of Figures 4A-4B. A sCA according to the present invention is defined in Algorithm 1 and explained next.

First, the sCA is created after setting the value of its parameters as per the dataset at hand (lines 1 to 5), including the limits of the grid and thus its bins. Then, a set of P preparatory data are used to initialize the grid off-line by assigning the states of the corresponding cells according to the instances' values (lines 6 to 11). After this preliminary process, it is important to note that several preparatory data instances might collide into the same cell, thereby yielding several state occurrences for that specific cell. Since each cell must possess only one state for predicting purposes, lines 12 to 16 aim at removing this multiplicity of states by assigning each cell the state that occurs most among the preparatory data instances that fell within its boundaries. Similarly, it must be ensured that all cells have a state assigned, i.e. no empty grid cell status must be guaranteed. To this end, lines 17 to 23 apply the local rule $f_{\cup}(.)$ over the neighbors of every cell, repeating the process (generations) until every cell has been assigned a state. This procedure can again render several different states for a given cell, so the previously explained majority state assignment procedure is again enforced over all cells of the grid (lines 24 to 28).

---

**Algorithm 1**: The *streamified* cellular automaton (sCA)

**Input:**
Preparatory data instances $[(X_t, y_t)]_{t=0}^{t=P-1}$ ; training/testing data for the rest of the stream
$[(X_t, y_t)]_{t=P}^{t=\infty}$ ; the grid size G (bins per dimension); a local update rule $f_{\cup}(.)$ ; a neighborhood
function $f_{\boxplus}(c)$ for cell with coordinates $c$ $c \in \mathcal{G} = \{1, ..., G\}^d$ as its argument; a radius R for
the neighborhood operator

**Output:** Trained streamified CA (sCA), producing predictions $\hat{y}_t \forall t \in [P, \infty]$

1 Let the number of dimensions d of the grid be the number of features in $X_t$

2 Let the number of cell states $|\mathcal{S}|$ be the number of classes (alphabet of $y_t$)

3 Set an empty vector of state hits per every cell, $h_c = [\,] \forall c \in \mathcal{G}$

(continued)

| Algorithm 1: The *streamified* cellular automaton (sCA) |
|---|

4 Set an initial estimation of the boundaries of the grid $\left[\left(lim_n^{low}, lim_n^{high}\right)\right]_{n=1}^{d}$

5 Create the sCA grid as per G, *n* and $\left[\left(lim_n^{low}, lim_n^{high}\right)\right]_{n=1}^{d}$

6 for *t*=0 *to* P-1 **do** // Preparatory process

7    Update limits as per $X_t$, e.g., $lim_n^{low} = \min \{lim_n^{low}, x_t^n\}$

8    Reconfigure grid bins as per *G* and the updated $\left[\left(lim_n^{low}, lim_n^{high}\right)\right]_{n=1}^{d}$

9    Select the cell c in the grid that encloses $X_t$

10    Append $y_t$ to the vector of state hits in the cell, e.g. $h_{c'} = [h_{c'}, y_t]$

11 **end**

12 **for** $c \in \mathcal{G}$ **do** // Guaranteeing one state per cell

13        **if** $|h_c| > 1$ **then** // More than 1 state hit in cell

14            $S(c) = \arg max_{s \in S} \sum_{i=1}^{|h_c|} \mathbb{I}\left(h_c^i = s\right)$

15        **end**

16 **end**

17 **while** $\exists c \in \exists \mathcal{G}: h_c = [\,]$ do //Ensuring a hit in all cells

18        **for** $c \in \mathcal{G}$ **do**

19            Compute the neighboring cells of **c** as per $f_{\boxplus}(c)$ and R

20            Compute state *s'* by applying rule $f_{\upsilon}(.)$ over the neighboring cells

21            Append *s'* to $h_c$, i.e., $h_c = [h_c, s']$

22        **end**

23 **end**

24 **for** $c \in \mathcal{G}$ **do** // Guaranteeing one state per cell

25        **if** $|h_c| > 1$ **then** // More than 1 state hit in cell

26            $S(c) = \arg max_{s \in S} \sum_{i=1}^{|h_c|} \mathbb{I}\left(h_c^i = s\right)$

27        **end**

28 **end**

29 **for** *t*= P *to* ∞ **do** // Streaming process

30        Predict $\hat{y}_t$ as S(**c**), with **c** denoting the coordinates of the cell enclosing $X_t$

31        Update limits as per $X_t$, e.g., $lim_n^{low} = \min \{lim_n^{low}, x_t^n\}$

32        Reconfigure grid bins as per *G* and the updated $\left[\left(lim_n^{low}, lim_n^{high}\right)\right]_{n=1}^{d}$

33        Update cell state to the verified class of the test instance: $S(c) = y_t$

34 **end**

Once this preparatory process is finished, the sCA is ready for the test-then-update process with the rest of the instances (lines 29 to 34). In this process, the sCA first predicts the label of the arriving test instance $\hat{y}_t$ and updates the limits to reconfigure the bins. By this way, the sCA always represents the currently prevailing distribution of the streaming data at its input. After that, the sCA updates the current state of the cell enclosing the test instance with the true label of the incoming instance. As a result, the cells of the sCA always have an updated state according to the streaming data. This algorithm is used both by the passive strategy (block 121 in Figure 4A) and by the active one (block 121 in Figure 4B).

Some of the differences between the proposed sCA and the conventional CA are:

- Preparatory instances: a small portion of the data stream (preparatory instances $[(X_t, y_t)]_{t=0}^{P-1}$ is used to perform the CA initialization. Then, the grid is seeded with these data values, and the CA progresses through several generations (and applying the local rule) until all cells are assigned a state. With the traditional CA, the whole dataset is available from the beginning. Therefore, the CA initialization is not required.

- An updated representation of the instance space: since historical data is not available and data grow continuously, the sCA updates the cell range and bins of the grid every time a new data instance arrives. By doing this, it is ensured that the range of values of the instance space is updated during the streaming process. With the traditional CA, as the whole training dataset is static, the grid boundaries and cell bins are calculated at the beginning of the data mining process, and remain unaltered during the test phase.

- CA's grid continuously updated: sCA's grid is also updated when new data arrives by assigning the incoming label (state) to the corresponding cell. Instead of examining the cells in the immediate neighborhood of this corresponding cell during several generations (which would take time and computation resources), sCA just checks the previous state of the cell and the current state provide by the recent data instance. When both coincide, no change is required, but when they differ, the cell adopts the state corresponding to the true label of the incoming data instance. In this sense, sCA always represents the current data distribution.

This is the way sCA works as incremental learner. However, with the traditional CA , once initialized, a local rule is applied over successive generations to set the state of a given cell depending on the states of its neighbors. This applies both for the passive strategy (block 121 in Figure 4A) and for the active one (block 121 in Figure 4B).

Turning back to Figures 4A-4B, so far module 121 has been described, explaining how the sCA is adapted for making a prediction while stream learning. In the active strategy depicted in Figure 4B, in module 122, possible changes in the distribution of streaming data are detected from the performance accuracy of the previous prediction when a new instance arrives during the streaming process. Module 122 implements drift detection.

In a particular embodiment, drift detection (block 122 in Figure 4B) may be carried out by following the well-known algorithm "Paired Learners" disclosed by Bach, Stephen H., and Marcus A. Maloof in "Paired learners for concept drift" Eighth IEEE International Conference on Data Mining, IEEE, 2008. In this case, a stable streamified CA (sCA) is paired with a reactive one: a stable learner is incrementally trained and predicts considering all of its experience during the streaming process, whereas a reactive learner is trained and predicts based on its experience over a time window of length W. In embodiments of the invention, any conventional online learning algorithm can be used as a base learner. In this embodiment, the stable learner is used for prediction, whereas the reactive learner is used to detect possible concept drifts (block 122 in Figure 4B). Drift detector 122 may be implemented as follows: While the concept (data distribution) remains unchanged, the stable learner provides a better performance than the reactive learner. A counter is arranged to count the number of times within the window that the reactive learner predicts correctly the stream data, and the stable learner produces a bad prediction. If the proportion of these occurences surpasses a threshold θ, a concept change is assumed to have occurred, the stable learner is replaced with the reactive one, and the stable learner is reinitialized. Finally, both stable and reactive learners are trained incrementally and over the windowed data, respectively.

Finally, a module 123 implements an adaptation mechanism for the CA. In a particular embodiment, the adaptation mechanism can be based on the adaptation mechanism disclosed by Bach, Stephen H., et al in the previously cited disclosure. However, it is preferably adapted to the CA for streaming (sCA), as follows: Once a drift occurs, the grid of the CA for streaming of the present invention is seeded with a W-sized window of past instances, which allows representing the current concept (data distribution). Then, the CA for streaming of the present invention progresses again through several generations (and applying the local rule) until all cells are assigned a state. This is described in detail referring to Algorithm 3.

Algorithm 3 relies on a couple of paired streamified CA learners in order to cope with concept drift. A stable sCA is paired with a reactive one: a stable learner is incrementally trained and predicts considering all of its experience during the streaming process, whereas a reactive learner is trained and predicts based on its experience over a time window of length W. The comparison between the accuracies scored by both learners over the time window permits to declare the presence of a concept change when the reactive learner starts predicting more accurately than its stable counterpart. When this is the case, the grid state values of the reactive CA is transferred to the stable CA, and proceeds forward by predicting subsequent stream instances with an updated grid that potentially best represents the prevailing distribution of the stream.

---

**Algorithm 3:** Proposed CARILLON approach for stream learning

**Input:**

Preparatory data instances $\{(X_t, y_t)\}_{t=0}^{P-1}$; training/testing data for the rest of the stream $(X_t, y_t)_{t=P}^{t=\infty}$; window size W for the reactive sCA learner; threshold $\theta$ for substituting the stable sCA learner with the reactive one; sCA parameters G, $f_\cup(.)$, $f_\boxplus(c)$ for cell and R as per Algorithm 1

**Output:** Updated stable and reactive learners $sCA_S$ and $sCA_r$

1 Let $\mathbf{c} = [c^w]_{w=1}^{W}$ be a circular list of W bits, each initially set to $c^w = 0 \ \forall w$

2 Perform lines 1-28 of Algorithm 1 for $sCA_S$ and $sCA_r$ over $\{(X_t, y_t)\}_{t=0}^{P-1}$

3 **for** $t= P$ $to$ $\infty$ **do**

4      Let $\hat{y}_s = sCA_S(X_t)$ and $\hat{y}_r = sCA_r(X_t)$ as per line 30 of Algorithm 1

5      Set $c^1 = 0$ and $c^w = c^{w-1}$ for w = 2, ..., W

6      **if** $\hat{y}_s \neq y_t$ $and$ $\hat{y}_r = y_t$ **then**

7          Set $c^1 = 1$

8      **end**

9

     **if** $W^{-1} \sum_{w=1}^{W} c^w > \theta$ **then** // Reactive performs better

10          Copy grid state values of $sCA_r$ to $sCA_S$ (knowledge transfer)

11          Set $c^w = 0 \ \forall w = 1, .., W$

12      **end**

13      Train $sCA_S$ incrementally with $(X_t, y_t)$ // Lines 31-33, Alg. 1

14

     Train $sCA_r$ from scratch over $\{(X_{t'}, y_{t'})\}_{t'=t-W+1}^{t}$

15 **end**

---

In sum, a method for making water demand/usage predictions has been disclosed, in which a cellular automaton performing correctly in real-time conditions has been used. The method additionally adapts to drifts in the stream of data captured by sensors disposed along a water supply network. The method can be used to predict water consumption/demand in a facility (such as a home or industrial facility), or to make a prediction on the water demand at any point in a water supply system equipped with sensors capable of collecting data streams associated to the water flow. As can be observed, drift adaptation according to the present invention shows a natural ability to learn incrementally, which is a crucial requirement under the constrained conditions present in RtML. Besides, only a few parameters are required, which simplifies the parameter tuning process in drifting environments. In addition, the sCA learns a data distribution with relatively few instances which, in the context of stream learning, involves a quicker preparation (warm-up) phase. What is more, in setups where computational costs must be reduced even more, a subsampling strategy can be recommended, where only a fraction of instances of the data stream is considered for model updating. In these scenarios, the capability of the CA-based model of the present invention to represent the data distribution with a few instances fits perfectly. Also, the CA-based model of the present invention proves an excellent capability of evolving through several generations and represent a data distribution from a few annotated data instances. Finally, it adapts to evolving conditions where changes (drifts) provoke that learning algorithms have to forget and learn the old and the new concept, respectively.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

**Claims**

1. A computer-implemented method for making a prediction of water demand at a point (11-18) in a water supply network (10), the method comprising:

   providing at least one stream of data $D_{0,t} = d_0, ..., d_t$ representing the water consumption in a corresponding at least one point (11-18) in a water supply network (10), wherein $d_t = (\mathbf{x}_t, y_i)$ is a data instance captured at time t, $\mathbf{x}_t$ is a feature vector and $y_t$ its label, wherein label $y_t$ denotes whether there is an increase or decrease in the water demand/consume;
   creating a cellular automaton (121) defined by the following parameters: (i) lattice formed by a grid of elements or cells, (ii) states assigned to said cells, (iii) neighbourhood, and (iv) at least one local rule; wherein the lattice is formed by the at least one stream of data $D_{0,t}$ representing the water consumption in a respective at least one point in the water supply system (10); wherein said states assigned to each cell indicate either an increase or a decrease in the water demand at said point (11-18) as denoted by the labels;
   at said cellular automaton (121), predicting whether the water demand at said point (11-18) in the water supply network (10) will increase or decrease in a next sampling instant t+1 by comparing label $y_t$ of the new data instance $d_t$ with a prediction performed at the previous sampling instant.

2. The method of claim 1, wherein the step of predicting whether the water demand at said point (11-18) in the water supply network (10) will increase or decrease in a next sampling instant t+1, is performed every time a new data instance $d_t$ arrives, updating the cells forming said grid in the cellular automaton (121) by assigning an incoming state represented by label $y_t$.

3. The method of claim 2, wherein for updating the grid, only the previous state of the cell and the current state provided by the recent data instance are checked, and if they are the same state, no change is required, but if they differ, the cell adopts the state provided by the incoming data instance.

4. The method of claim 1, wherein the prediction for the next sampling instant t+1 is updated with respect to the previous prediction only when a drift has been detected.

5. The method of claim 4, wherein the step of predicting whether the water demand at said point (11-18) in the water supply network (10) will increase or decrease in a next sampling instant t+1, is performed as follows:

   for every prediction performed at the previous sampling instant, delivering the cellular automaton (121) a performance accuracy to a drift detector (122),
   based on said performance accuracy, the drift detector (122) obtaining a flag indicating whether drift has been detected or not; and
   when the flag indicates that a drift has been detected, acting (123) on the cellular automaton (121) to adapt to the detected drift.

6. The method of either claim 4 or 5, wherein after a drift has been detected, the cellular automaton (121) is initialized.

7. The method of claim 6, wherein it is initialized as follows:

   the cellular automaton (121) is seeded with a sliding window w of past instances which represent the current concept or data distribution), wherein the size of window w depends on the type of drift,
   the cellular automaton (121) progresses again through several iterations, applying the local rule, until all cells are assigned a state.

8. The method of claim 7, wherein in order to also consider possible spatial correlations along the water supply system (10), said time window w is extended with water consumption measurements collected in a plurality of points along the water supply system (10).

9. The method of any one of claims 1-8, further comprising, in view of the prediction, performing an action, if necessary, on one or more points (11-18) in the water supply system (10).

10. A device (150) comprising:

means (115) for providing at least one stream of data $D_{0,t} = d_0, ..., d_t$ representing the water consumption in a corresponding at least one point (11-18) in a water supply network (10), wherein $d_t = (\mathbf{x}_t, y_i)$ is a data instance captured at time t, $\mathbf{x}_t$ is a feature vector and $y_t$ its label, wherein label $y_t$ denotes whether there is an increase or decrease in the water demand/consume;

a streaming processor (120) embedding a cellular automaton (121) defined by the following parameters: (i) lattice formed by a grid of elements or cells, (ii) states assigned to said cells, (iii) neighbourhood, and (iv) at least one local rule; wherein the lattice is formed by the at least one stream of data $D_{0,t}$ representing the water consumption in a respective at least one point in the water supply system (10); wherein said states assigned to each cell indicate either an increase or a decrease in the water demand at said point (11-18) as denoted by the labels;

wherein the cellular automaton (121) is configured for predicting whether the water demand at said point (11-18) in the water supply network (10) will increase or decrease in a next sampling instant t+1 by comparing label $y_t$ of the new data instance $d_t$ with a prediction performed at the previous sampling instant.

11. The device (150) of claim 10, further comprising a data communications module (130) configured to send data instances captured by a meter (105) associated to the device (150) and to receive data instances from other devices.

12. A computer program product comprising computer program instructions/code for performing the method according to any one of claims 1-9.

13. A computer-readable memory/medium that stores program instructions/code for performing the method according to any one of claims 1-9.

**FIG. 1**

EP 3 843 027 A1

**FIG. 2**

FIG. 3

EP 3 843 027 A1

**FIG. 4A**

EP 3 843 027 A1

FIG. 4B

Europäisches
Patentamt

European
Patent Office

Office européen
des brevets

# EUROPEAN SEARCH REPORT

**Application Number**

EP 19 38 3204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | REN ZIWEI ET AL: "Short-term demand forecasting for distributed water supply networks: A multi-scale approach", 2016 12TH WORLD CONGRESS ON INTELLIGENT CONTROL AND AUTOMATION (WCICA), IEEE, 12 June 2016 (2016-06-12), pages 1860-1865, XP032972472, DOI: 10.1109/WCICA.2016.7578578 [retrieved on 2016-09-27] * the whole document * | 1-13 | INV. G06Q50/06 G01D4/00 G06Q10/06 |
| X | WO 2013/026731 A1 (ABB TECHNOLOGY AG [CH]; BLANK FREDERIK [DE] ET AL.) 28 February 2013 (2013-02-28) * page 3, line 7 - page 17, line 19 * | 1-13 | |
| X | WO 2012/036633 A1 (PREIS AMITSUR [SG]; ALLEN MICHAEL [SG]; GOLDSMITH DANIEL [GB]) 22 March 2012 (2012-03-22) * page 2, line 21 - page 14, line 12 * * page 27, line 22 - page 30, line 15; claims 1,10 * | 1-13 | |

| TECHNICAL FIELDS SEARCHED (IPC) |
|---|
| G01D G06Q |

The present search report has been drawn up for all claims

| Place of search | Date of completion of the search | Examiner |
|---|---|---|
| Munich | 1 July 2020 | Kurze, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 38 3204

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2020

| Patent document cited in search report | | Publication date | Patent family member(s) | | Publication date |
|---|---|---|---|---|---|
| WO 2013026731 | A1 | 28-02-2013 | DE 112012003487 T5 | | 08-05-2014 |
| | | | SE 1450161 A1 | | 14-04-2014 |
| | | | WO 2013026731 A1 | | 28-02-2013 |
| WO 2012036633 | A1 | 22-03-2012 | SG 188534 A1 | | 30-04-2013 |
| | | | US 2014052421 A1 | | 20-02-2014 |
| | | | WO 2012036633 A1 | | 22-03-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170089798 A1
- WO 2018154449A1 A

**Non-patent literature cited in the description**

- **ALFARRA H. A. et al.** *A Wireless Smart Sensor Network for Flood Management Optimization (IJETS),* June 2017, vol. 7 (1
- Machine Learning for Data Streams with Practical Examples. **BIFET, A. et al.** MOA-Book-2018. MIT Press, 2018
- **GAMA, J. et al.** A survey on concept drift adaptation. *ACM computing surveys (CSUR),* 2014, vol. 46, 44
- **BIFET A. et al.** *MOA-Book-2018*
- **KARI, J.** Theory of cellular automata: A survey. *Theoretical Computer Science,* 2005, vol. 334, 3-33
- Paired learners for concept drift. **BACH, STEPHEN H. ; MARCUS A. MALOOF.** Eighth IEEE International Conference on Data Mining. IEEE, 2008